**Europäisches Patentamt**

**European Patent Office**

**Office européen des brevets**

(19)

(11) Veröffentlichungsnummer : **0 403 486 B1**

# (12) EUROPÄISCHE PATENTSCHRIFT

(45) Veröffentlichungstag der Patentschrift :
**15.04.92 Patentblatt 92/16**

(51) Int. Cl.$^5$ : **G01B 21/20**

(21) Anmeldenummer : **89901269.4**

(22) Anmeldetag : **13.01.89**

(86) Internationale Anmeldenummer :
**PCT/DE89/00015**

(87) Internationale Veröffentlichungsnummer :
**WO 89/07239 10.08.89 Gazette 89/18**

(54) **VERFAHREN UND VORRICHTUNG ZUR ENDBEREICHSPRÜFUNG MITTELS ULTRASCHALL LANGGESTRECKTER ROTATIONSSYMETRISCHER PRÜFSTÜCKE.**

(30) Priorität : **03.02.88 DE 3803151**

(43) Veröffentlichungstag der Anmeldung :
**27.12.90 Patentblatt 90/52**

(45) Bekanntmachung des Hinweises auf die
Patenterteilung :
**15.04.92 Patentblatt 92/16**

(84) Benannte Vertragsstaaten :
**AT DE GB IT**

(56) Entgegenhaltungen :
**EP-A- 0 039 143**

(56) Entgegenhaltungen :
**DE-A- 1 966 060**
**DE-C- 3 340 713**
**US-A- 3 848 127**
**US-A- 4 562 738**

(73) Patentinhaber : **KRAUTKRÄMER GmbH & Co.**
**Robert-Bosch-Strasse 3**
**W-5030 Hürth 5 (Efferen) (DE)**

(72) Erfinder : **KARBACH, Bernhard**
**Matthias-Curt-Str. 1**
**W-5042 Erftstadt-Friesheim (DE)**

(74) Vertreter : **Bauer, Wulf, Dr.**
**Wolfgang-Müller-Strasse 12**
**W-5000 Köln 51 (Marienburg) (DE)**

EP 0 403 486 B1

**Beschreibung**

Die Erfindung betrifft ein Verfahren nach dem Oberbegriff des Patentanspruchs 1 sowie eine Vorrichtung zur Durchführung dieses Verfahrens gemäß dem Patentanspruch 13 zur Ultraschallprüfung von langgestreckten, rotationssymmetrischen Prüfstücken.

Die Prüfung über die gesamte Prüfstücklänge (im folgenden Hauptprüfung genannt) derartiger Prüfstücke erfolgt allgemein im Durchlaufbetrieb, siehe J. Krautkrämer und H. Krautkrämer "Werkstoffprüfung mit Ultraschall", 4. Auflage, Springerverlag oder US-A-4 562 738. In diesen Prüfanlagen werden die Prüfstücke in Axialrichtung transportiert und entweder selbst gedreht, wobei dann ein Prüfkopfträger ortsfest bleibt, oder ein Rotor als Prüfkopfträger rotiert um die Achse des zu prüfenden Prüfstücks, wodurch eine Drehbewegung des Prüfstücks selbst entfällt. Unabhängig von der speziellen Arbeitsweise der Ultraschallprüfanlage gelingt es nicht zuverlässig, die beiden Endbereiche der Prüfstücke, also in Transportrichtung gesehen den Anfangsbereich und den hinteren Endbereich, zuverlässig zu prüfen, weil entweder die Prüfkopfträger erst nach Einlaufen des Prüfstücks in die Prüfanlage angelegt und vor Auslaufen des Prüfstücks abgehoben werden müssen oder eine Totzeit dadurch entsteht, daß nach Einlaufen des vorderen Endes des Prüfstücks der Prüfkopfhalter zunächst sicher am Prüfstück anliegen muß und sich die Ankopplungsverhältnisse stabilisieren müssen, oder die Prüfköpfe zur Vermeidung von Störanzeigen erst nach Stabilisieren der Ankopplung eingeschaltet werden können. Entsprechende Probleme treten in Nähe des hinteren Endes des Prüfstücks auf. Hier muß der Prüfkopfhalter vor dem tatsächlichen Prüfstückende abgehoben werden oder die Ankopplungsverhältnisse bleiben nicht bis zum Prüfstückende konstant.

Es ist bekannt, die ungeprüft bleibenden Endbereiche in gesonderten Arbeitsvorgängen zu prüfen, die Prüfung erfolgt in sogenannten "Rohrendenprüfeinrichtungen" bzw. "Stangenendenprüfeinrichtungen", sie erfolgt teilweise auch heute noch manuell. Für die maschinelle Prüfung werden die Prüfstücke quer und quer zu den einzelnen Prüfstationen bewegt. Sie werden aus dem Strang der lineartransportierten Prüfstücke vereinzelt, nebeneinander angeordnet und nacheinander zunächst an einer Prüfanlage für einen Endbereich gestoppt, geprüft, anschließend weiter quer bewegt, an einer zweiten Endbereichsprüfanlage für den anderen Endbereich gestoppt, dort geprüft und wieder weiter querbewegt. Für die beiden, nacheinander erfolgenden Endbereichsprüfungen mit den beiden Endbereichsprüfanlägen müssen die Rohre, wenn sie die Höhe der jeweiligen Endbereichsprüfanlage erreicht hatten, axial bewegt und in die Endbereichsprüfanlage eingeführt werden, danach wird das Prüfstück für die Prüfung in Rotation versetzt. Je nach geforderter Länge des am Prüfstück zu untersuchenden Endbereichs werden während der Rotation des Prüfstücks die Prüfkopfhalter verschoben.

Diese gebräuchliche Technik erfordert relativ aufwendige Transporteinrichtungen, insbesondere Quertransporteinrichtungen und Vorrichtungen zur exakten Positionierung der Prüfstückenden in zwei "Endenprüfeinrichtungen", nämlich eine für den vorderen Endbereich und eine für den hinteren Endbereich. Dabei sind Rohre bzw. Stangen, die eine bestimmte Ungeradheit überschreiten, häufig nicht mehr mit einer vernünftigen Drehzahl rotierbar, so daß die üblichen und geforderten Durchsatzleistungen mit Prüfeinrichtungen dieser Art nicht erreichbar sind. Nachteilig bei dem vorbekannten Prüfverfahren ist auch, daß die Positionierung der Prüfstücke gegenüber den Enden-Prüfeinrichtungen jeweils neu erfolgen muß und die Positionierung des Prüfstücks, wie sie durch die Sensoren für Prüfstücklängenbegrenzung der Prüfanlage für die gesamte Prüfstückslänge ohnehin vorhanden sind, nicht genutzt werden kann.

Aus der US-A-3 848 127 ist eine Röntgen-Prüfanlage für geschweißte Rohre bekannt, die eine Prüfung der Schweißnähte im Endbereich der Rohre ermöglicht. Aus der DE-C-33 40 713 ist eine Vorrichtung zum Vermessen der Endgestalt von Rohren bekannt, bei der Meßaufnehmer an einem Rotor angeordnet sind, der sich um die Rohrachse dreht.

Der Erfindung liegt die Aufgabe zugrunde, ein Verfahren und eine Vorrichtung der eingangs genannten Art dahingehend weiterzuentwickeln, daß der Transport der Prüfstücke für die Endbereichsprüfung deutlich vereinfacht wird, die Anordnung der einzelnen Prüfstücke zueinander bei der Endbereichsprüfung nicht verändert werden muß, der apparative Aufwand verringert wird und sich eine günstige Kombination mit der Hauptprüfung ergibt.

Diese Aufgabe wird verfahrensmäßig gelöst durch die kennzeichnenden Merkmale des Anspruchs 1, vorrichtungsmäßig wird sie gelöst durch die kennzeichnenden Merkmale des Anspruchs 13.

Erfindungsgemäß werden die Prüfstücke in der Anordnung zueinander geprüft, in der sie auch die Prüfanlage für die gesamte Prüfstücklänge kontinuierlich durchlaufen, also hintereinanderliegend, Stoß an Stoß, bei linearem Transport (in Axialrichtung). Dabei wird für die Endbereichsprüfung und während der Dauer dieser Endbereichsprüfung der kontinuierliche Transport der Prüfstücke gestoppt, und zwar in den Positionen, in denen sich die zu testenden Endbereiche innerhalb der Ankopplungskammer der Prüfanlage für die Endbereichsprüfung befinden.

Das erfindungsgemäße Verfahren und die nach diesem Verfahren arbeitende Vorrichtung haben den Vorteil, daß für die Prüfung der Endbereiche lediglich eine einzige Rotationsprüfmaschine benötigt wird, wohingegen nach dem Stand der Technik zwei Prüfanlagen für diese Prüfung eingesetzt werden. Dadurch wird die Positionierung des zweiten Endbereichs der Prüfstücke vereinfacht, denn aufgrund des axialen Durchlaufs der Prüfstücke bleibt die räumliche Zuordnung der Enden der Prüfstücke erhalten. Wegen der Vereinzelung der Rohre nach dem Stand der Technik ist eine derartige Zuordnung nicht gegeben. Weiterhin werden im wesentlichen nur axiale Transporteinrichtung benötigt, die einfacher auszulegen sind und einfacher bauen als Quertransporteinrichtungen und die zugehörigen Rohrdreheinrichtungen. Das erfindungsgemäße Verfahren ermöglicht schließlich einen rascheren Ablauf der Endbereichsprüfung, das Verfahren eignet sich sehr günstig für die Kombination mit der Hauptprüfung, worauf später noch eingegangen wird.

Erfindungsgemäß wird insgesamt ein erheblich schnellerer und damit wirtschaftlicherer Durchlauf der Prüfstücke erreicht. Zwar müssen die Prüfstücke immer wieder abgebremst und gestoppt werden, um die Endbereichsprüfung durchzuführen, die hierfür erforderlichen Maßnahmen lassen sich aber einfach auslegen und sind einfach zu steuern. Die Endbereichsprüfung geht nunmehr wesentlich schneller und auch mit insgesamt geringerem Platzbedarf vonstatten, so daß die totale Prüfzeit gegenüber dem Stand der Technik erheblich verkürzt wird.

Mit einer Umdrehung des Rotors kann die Prüfung aller geforderten Fehlerarten im Endbereich durchgeführt werden. Die Zeitdauer für die Prüfung der Endbereiche ist dadurch äußerst kurz. Die Unterbrechungen gegenüber dem kontinuierlichen Durchlauf sind damit kurz, ihre Zeitdauer wird im wesentlichen durch die Zeitdauer für den Abbrems- und Stoppvorgang bestimmt, sowie das anschließende Beschleunigen.

Der rotierende Ankopplungsraum ist in Längsrichtung der Prüfstücke so knapp bemessen, daß er gerade die erforderlichen Prüfköpfe aufnehmen kann. Seitlich wird der Ankopplungsraum durch Blenden abgedichtet, die mitrotieren, durch sie wird ein Eindringen von Wasser oder einer anderen Ankopplungsflüssigkeit in den Innenraum von Rohren weitgehend vermieden.

In einer besonders bevorzugten Ausführung der Erfindung sind die Prüfanlage für die Endbereichsprüfung und eine Prüfanlage für die Hauptprüfung auf gleicher Achse hintereinander angeordnet. Hierdurch werden die Transportprobleme zwischen den beiden Prüfanlagen besonders vereinfacht. Der Abstand der Prüfanlagen sollte vorteilhafterweise Null oder größer sein als die Länge des längsten zu prüfenden Prüfstücks. Dadurch kann die Prüfanlage für die Hauptprüfung ein Prüfstück kontinuierlich durchprüfen, ohne daß die Gefahr besteht, daß ein Endbereich dieses Prüfstücks bereits in die Ankopplungskammer der Prüfanlage für die Endbereichsprüfung einläuft. Bei kürzerem Abstand der beiden Prüfanlagen ausgenommen Abstand Null müßte die Hauptprüfung kurz unterbrochen werden, wenn sich der Endbereich in der Ankopplungskammer der Prüfanlage für die Endbereichsprüfung befindet, danach muß die Hauptprüfung weitergeführt werden. Bei eng begrenzten Platzverhältnissen ist eine derartige Arbeitsweise möglich. Eine Unterbrechung der Hauptprüfung ist jedoch ein Nachteil.

Andererseits sollten die beiden Prüfanlagen nicht wesentlich weiter auseinander angeordnet sein, als es etwa der 1,1- bis 1,5-fachen Länge des längsten zu untersuchenden Prüfstücks entspricht. Jeder weitere Abstand würde lediglich die Sperrigkeit der Gesamtanlage erhöhen und die Positionierung der Enden der Prüfstücke unsicherer machen, wenn lediglich eine Prüfanlage mit Sensoren für die Prüstücklängenbegrenzung ausgerüstet ist.

In einer besonders bevorzugten Weiterbildung der Erfindung sind die beiden Prüfanlagen zu einer einzigen Prüfanlage zusammengefaßt, in diesem Fall arbeitet die Prüfanlage für die Hauptprüfung ebenfalls mit dem Rotor, in dessen Prüfkopfträger sich die Prüfköpfe für die Endbereichsprüfanlage befinden. Eine derartige Gesamtanordnung hat einen geringen Platzbedarf und bietet erhebliche Vereinfachungen im Verfahrensablauf. In besonders bevorzugter Ausbildung werden für die Endbereichsprüfung dieselben Prüfköpfe verwendet, mit denen auch die Hauptprüfung durchgeführt wird.

In einer anderen, bevorzugten Weiterbildung der Erfindung sind separate Prüfanlagen für die Endbreichsprüfung und die Hauptprüfung vorgesehen, die beiden Prüfanlagen sind jedoch nicht gleichachsig angeordnet, sondern ihre Achsen sind parallel versetzt. Dadurch wird ein Quertransport zwischen der Transportrichtung der einen Prüfanlage und der hierzu parallelen Transportrichtung der anderen Prüfanlage notwendig. Dieser Quertransport kann jedoch äußerst einfach sein, beispielsweise eine schräge Ebene mit Vorlagestoppern und bringt den Vorteil, daß bereits am Ausgang der ersten Prüfanlage eine Aussortierung fehlerhafter Prüfstücke stattfinden kann. Weiterhin kann für die Hauptprüfung, wie generell bei separaten Prüfanlagen, auch eine Prüfanlage mit stationärem (nicht rotierendem) Prüfkopfträger eingesetzt werden, was bei vorhandenen Anlagen für die Hauptprüfung dieser Art, die um die Endbereichsprüfung ergänzt werden sollen, von Vorteil ist.

Die bei dem erfindungsgemäßen Verfahren der Endbereichsprüfung verbleibenden ungeprüften Endbereiche liegen in der gleichen Größenordnung, wie sie mit den bisher eingesetzten Rohrendenprüfeinrichtungen nach dem Stand der Technik und mit stationären Prüfkopfsystemen und rotierenden Rohren bzw. Stangen erreicht werden.

EP 0 403 486 B1

Weisen die durchlaufenden Prüfstücke unterschiedliche Längen auf, so werden diese ebenso erfaßt, wie dies nach dem bisherigen Stand der Technik bekannt ist. Hier wird der Vorteil ausgenutzt, daß die Erfassung der Geometrie der Prüfstücke für die Endbereichsprüfung aufgrund des axialen Transports einfacher ist als bei Quertransport und bei gleichachsigen Prüfanlagen für Hauptprüfung und Endbereichsprüfung kombiniert werden kann.

Die Erfindung wird anhand von Auführungsbeispielen unter Bezugnahme auf die Ziechnung im folgenden näher erläutert. Dabei wird auch der Verfahrensablauf erklärt. In der Zeichnung zeigen:

Fig. 1 Eine Draufsicht in schematischer Darstellung auf eine Prüfanlage für die Endbereichsprüfung,

Fig. 2 einen Axialschnitt (schematisch) durch die wesentlichen Bereiche einer kombinierten Prüfanlage für die Haupt- und Endbereichsprüfung,

Fig. 3 ein Schnitt entlang der Schnittlinie III - III in Fig. 2,

Fig. 4 eine Seitenansicht in schematischer Darstellung einer Prüfanlage entsprechend Fig. 2 mit Stoppern,

Fig. 5 eine Seitenansicht entsprechend Figur 4 einer Prüfanlage mit Bremsbackenpaaren und

Fig. 6 eine Draufsicht (Prinzipdarstellung) einer Gesamtprüfanlage für Hauptprüfung und Endbereichsprüfung.

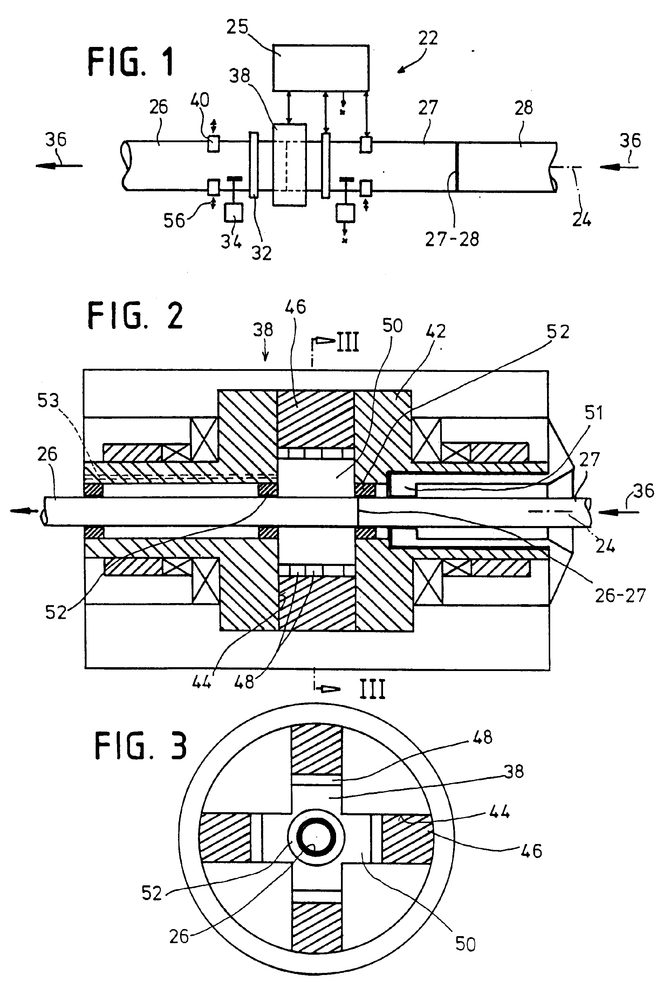

Figur 1 zeigt eine Prüfanlage 22 für die Endbereichsprüfung langgestreckter, runder Prüfstücke, also im Querschnitt gesehen kreisrunder Stangen oder Rohre.

Wie aus Fig. 1 ersichtlich ist, werden Prüfstücke 26 bis 28 Stoß-an-Stoß und in Axialrichtung 24 durch die Prüfanlage 22 transportiert; die Transportrichtung ist durch den Pfeil 36 kenntlich gemacht. Die einzelnen Stöße zwischen sich stirnseitig berührenden Prüfstücken werden durch die mit Bindestrichen verbundenen Bezugsziffern der jeweiligen Prüfstücke bezeichnet, so ist beispielsweise 27-28 der Stoß zwischen den beiden Prüfstücken 27 und 28. Die Prüfstücke liegen in Reihe hintereinander und durchlaufen die Prüfanlage für die Endbereichsprüfung 22 im wesentlichen gleichförmig, sie werden jedoch für relativ kurze Zeitspannen (wenige Sekunden) abgebremst, geprüft und wieder beschleunigt, wie es später noch erläutert werden wird. Gegenüber den axialen Transportvorgängen benötigen diese Vorgänge jedoch anteilsmäßig nur wenig Zeit.

In der Darstellung nach Fig. 1 wird der linke Endbereich (Anfang) des Prüfstücks 27 geprüft. Der Transport der Prüfstücke ist unterbrochen. Die Auswertung, Steuerung usw. findet in einer Elektronik 25 statt.

Die Prüfanlage 22 hat eine Prüfmaschine 38, eine Abbremseinrichtung 40, die im Ausführungsbeispiel nach Fig. 1 aus zwei Bremsbackenpaaren besteht, zwei Sensoren 32 für die Prüfstücklängenbegrenzung und zwei Sensoren 34 für die Prüfstückbewegung. In der Anordnung gemäß Fig. 1 ist der rechte Endbereich (das Ende) des Prüfstücks 26 bereits geprüft, als nächster, nach Abschluß der aktuellen Prüfung und Längstransport wird der rechte Endbereich des Prüfstücks 27 geprüft.

Eine Prüfmaschine 38, in der sowohl die Endbereichsprüfung als auch die Hauptprüfung durchgeführt werden kann, ist aus den Figuren 2 und 3 ersichtlich. Sie hat einen um die Achse 24 drehbar angeordneten Rotor 42, der äußerlich durch Zylindermäntel begrenzt wird. In ihm sind zwei radial verlaufende, sich unter 90 Grad kreuzende Ausnehmungen 44 vorgesehen, die durch Bereiche 46 nach außen verschlossen sind, welche an ihrer Innenseite einzelne Prüfköpfe 48 für die Hauptprüfung und die Endbreichsprüfung tragen. Diese befinden sich in einer oder mehreren Ebenen rechtwinklig zur Rotationsachse und sind so ausgewählt und angeordnet, daß die notwendigen und gewünschten Prüfungen bzw. geometrischen Messungen durchgeführt werden können. Der Bereich vor und zwischen den Prüfköpfen 48 definiert eine Ankopplungskamme 50, die seitlich durch Wände des Rotors 42 und insbesondere durch Blenden 52 begrenzt ist. Diese sind sehr nahe an den die Ankopplungskammer 50 in axialer Richtung begrenzenden Wänden des Rotors 42 angeordnet, in der vorzugsweisen Ausbildung, wie sie Fig. 2 zeigt, sind sie mit diesen Wänden bündig. Die Durchlaßöffnung der Blenden 52 entspricht dem Außendurchmesser der Prüfstücke 26 bis 29 unter Berücksichtigung der zugelassenen Durchmessertoleranz. Die Blenden 52 sind fest mit dem Rotor 42 verbunden und schleifen über die äußere Mantelfläche des jeweiligen Prüfstücks 26 bis 29. Mittels Buchsen 51, die nicht mitrotieren, werden die Prüfstücke jeweils geführt, mechanisch gehalten und zentriert.

Beim Betrieb ist die Ankopplungskammer 50 mit einer Ankopplungsflüssigkeit, im allgemeinen Wasser, gefüllt. Leckverluste der Ankopplungsflüssigkeit werden über separat vorgesehene Kanäle 53, die vorzugsweise in Nähe der Blenden 52 in die Ankopplungskammer 50 münden, ausgeglichen. Die axiale Länge der Ankopplungskammer 50 ist so kurz bemessen, wie es für die Aufnahme der Prüfköpfe 48 unbedingt erforderlich ist. Wenn die beiden Endbereiche jedes Prüfstücks 26 bis 29, die in der Hauptprüfung ungeprüft bleiben, axial länger sind als die Ankopplungskammer 50, werden die Endbereiche in zwei oder mehreren Schritten geprüft.

Durch die Vierzackanordnung, die insbesondere aus Fig. 3 hervorgeht, werden vier einzelne Teilkammern ausgebildet, in denen unterschiedliche Prüfköpfe 48, die auch Mehrfachprüfköpfe sein können, angeordnet sind. Auf diese Weise wird eine Hauptprüfung und eine Prüfung der Endbereiche nach unterschiedlichen Fehlerarten ermöglicht. Für die Erfindung ist es unerheblich, wie viele Teilkammern vorhanden sind und wie viele Prüfköpfe 48 wo und in welcher Art angeordnet sind. Die Ankopplungskammer 50 kann grundsätzlich jede belie-

4

bige Form aufweisen, die hier gezeigte Vierzackanordnung ist nur ein Beispiel, andere Ausführungen, wie sie beispielsweise für die Prüfanlage 20 bekannt sind, können eingesetzt werden.

In der in Figur 2 gezeigten Position der Prufstücke 26, 27 befindet sich der hintere Endbereich des Prüfstückes 26 innerhalb der Ankopplungskammer 50. Der Stoß 26-27 wird von der rechten Blende 52 der Ankopplungskammer 50 überdeckt, er ist so angeordnet, daß er sich möglichst in Nähe der Ankopplungskammer 50 befindet. Dadurch wird das immer noch ungeprüft verbleibende Endstück möglichst kurz. Bei einer oder mehreren Umdrehungen des Prüfkopfträgers 42 wird der in der Ankopplungskammer 50 befindliche hintere Endbereich des Prüfstücks 26 geprüft, unmittelbar anschließend erfolgt die Prüfung des linken Endbereichs des Prüfstücks 27 und danach die Hauptprüfung des Prüfstücks 27. Bei deren Abschluß befindet sich dann der hintere Endbereich des Prüfstücks 27 in der Ankopp lungskammer 50. In dieser Position erfolgt, nach Abbremsen und Stoppen, die Endbereichsprüfung dieses Endbereichs.

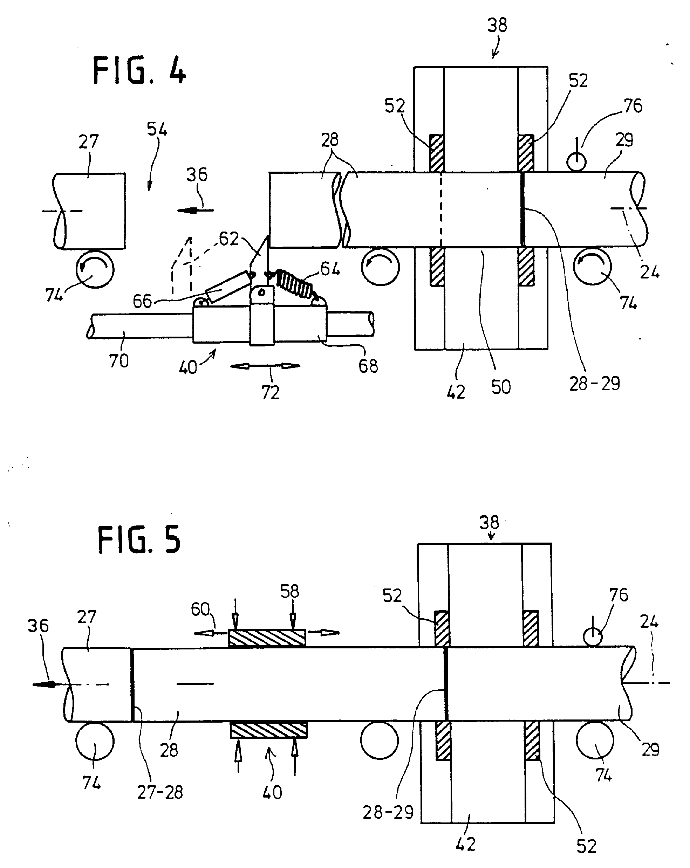

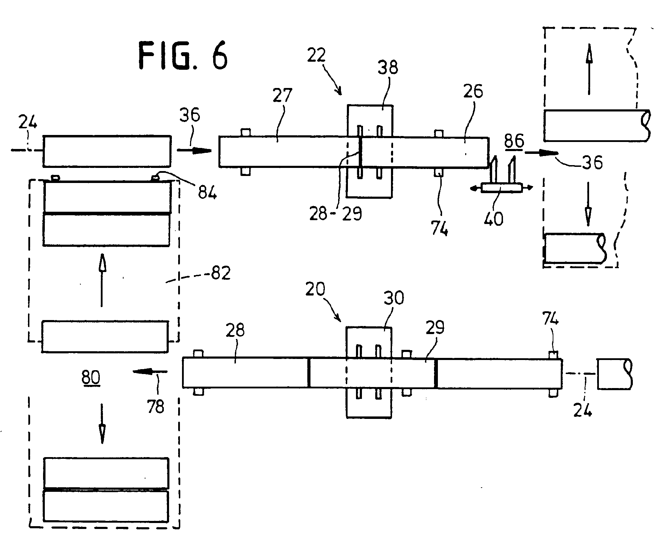

Der durch die Prüfmaschine 38 kontinuierlich hindurchgeförderte Strang der Prüfstücke wird für die Endbereichsprüfung abgebremst und gestoppt. Dies erfolgt mittels einer Abbremseinrichtung 40, die unterschiedlich ausgeführt sein kann. In den Figuren 1 und 5 hat die Abbremseinrichtung Mittel, die außen an die Wandung des Prüfstückes 26 bis 29 angreifen und dadurch dieses abbremsen und stoppen. Diese Mittel sind als Bremsbackenpaare ausgebildet, sie können aber auch als anderweitige Bremseinrichtungen ausgeführt sein. Im Ausführungsbeispielen nach Fig. 4 und Fig. 6 weist die Abbremseinrichtung 40 mindestens einen Stopper 62 auf, der vor ein Prüfstück greift, wie dies aus Figur 4 ersichtlich ist. Hierzu ist es notwendig, daß zwischen den Prüfstücken ein Freiraum 54 für das Eingreifen des Stoppers 62 geschaffen wird, dieser Freiraum ist aus Figur 4 ersichtlich. Zweck der Abbremseinrichtung 40 ist es stets, die Prüfstücke 26 bis 29 so abzubremsen, also die kinetische Energie aufzunehmen und zu verzehren, und abzustoppen, daß der jeweils zu prüfende Endbereich sich innerhalb der Ankopplungskammer 50 befindet, wie dies aus den Figuren ersichtlich ist. Im einzelnen:

In der Darstellung gemäß Figur 1 sind als Abbremseinrichtung 40 zwei Bremsbackenpaare vorgesehen, von denen das eine in Transportrichtung 3 6 hinter, das andere vor der Prüfanlage 22 angeordnet ist. Die Bremsbackenpaare haben jeweils bogenförmige (oder ähnlich ausgebildete) Bremskörper, die beidseitig und zangenartig auf den Außenmantel des Prüfstücks zubewegt oder von diesem abgehoben werden, in Figur 1 ist dies durch die Doppelpfeile 56 dargestellt. In der Darstellung nach Figur 1 ist die Abbremseinrichtung 40 betätigt, der Strang der Prüfstücke 26 bis 28 ist gestoppt. Ebenfalls ist die mit nur einem Bremsbackenpaar ausgerüstete Abbremseinrichtung 40 nach Fig. 5 in Anlage amAußenmantel des Prüfstücks 28 und hält dieses so fest, daß der vordere Endbereich des Stoß-an-Stoß nachfolgenden Prüfstücks 29 sich innerhalb der Ankopplungskammer 50 befindet. Die entsprechende Situation zeigt auch Fig. 2. Grundsätzlich ist als Abbremseinrichtung 40 nur ein Bremsbackenpaar notwendig, sofern dieses nahe genug an der Ankopplungskammer 50 angeordnet ist. Im Ausführungsbeispiel nach Fig. 5 ist durch Pfeile 58 die das Bremsbackenpaar anpressende Kraft symbolisiert. Die Pfeile 60 sollen andeuten, daß das Bremsbackenpaar für die Abbremsung in Richtung dieser Pfeile, also in Richtung der Achse 24, verschoben werden kann, um einerseits beim Abbremsen elastisch nachgeben zu können und andererseits eine Feinpositionierung durchführen zu können dergestalt, daß sich der Stoß 28-29 exakt an der Stelle befindet, wie dies in Figur 5 dargestellt ist.

Im Ausführungsbeispiel nach Fig. 4 wird das bereits im Rotor 42 geprüfte Prüfstück 27 mittels eines aktiven Antriebs rascher weggezogen, als die nachfolgenden Prüfstücke 28 und 29 in Richtung 36 gefördert werden. Dadurch entsteht an der Stelle des Stoßes 27-28 ein Freiraum 54, der bereits dann, wenn dieser Stoß den Ort eines schwekbar gelagerten Stoppers 62 der Abbremseinrichtung 40 erreicht, so ausreichend breit ist, daß der Stopper 62 in den Zwischenraum zwischen den Prüfstücken 27 und 28 einschwenken kann, wie in Figur 4 dargestellt ist. Das Einschwenken erfolgt um eine Achse, die parallel zur Achse 24 verläuft. Der Stopper 62 der Abbremseinrichtung 40 ist ebenfalls nachgiebig und elastisch angeordnet, dies ist im konkreten Ausführungsbeispiel erläutert durch eine Schraubenzugfeder 64 und einen Stoßdämpfer 66 im Form eines hydraulischen Kolbens. Beide sind am schwenkar gelagerten Stopper 62 angelenkt und stützen sich jeweils an einer Führung 68 ab. Nach Einschwenken des Stoppers 62 in die Bahn des Prüfstücks 28 stößt dieses zunächst an den Stopper 62 an, dieser wird ausgelenkt, die Feder 64 längt sich, der Stoßdämpfer 66 wird zusammengepreßt. Hierdurch wird die kinetische Energie, die im Prüfstück 28 und in den nachfolgenden Prüfstücken steckt, aufgezehrt. Anschließend wird durch Verschieben der Führung 68, falls dies notwendig sein sollte, das vordere Ende des Prüfstücks 28 positioniert, hierzu ist die Führung 68 auf einer Stange 70 in Richtung des Doppelpfeils 72 verschiebbar und aktiv antreibbar.

In Figur 4 ist die Position für die Prüfung des hinteren Endbereichs des Prüfstücks 28 gezeigt. Der Stopper 62 ist so angeordnet, daß das Prüfstück die in Fig. 4 gezeigte Position einnimmt, also sein hinteres Ende (der Stoß 28-29) sich innerhalb der rechten Blende 52 des hier schematisch angedeuteten Rotors 42 befindet. Soll nun anschließend der vordere Endbereich des nachfolgenden Prüfstücks 29 geprüft werden, so muß zunächst ein Axialtransport im Sinne des Pfeiles 36 erfolgen und anschließend wieder ein Abbremsen und Stoppen stattfinden. Dies kann entweder - wie in Figur 4 angedeutet - durch denselben Stopper 62 erfolgen, indem dieser um die zutreffende Strecke nach links verschoben wird, oder durch einen zweiten Stopper 63 durchgeführt werden. Der Abstand der Stopper (62, 63) ist etwas größer als die axiale Länge der Ankopplungskammer (50). Die entsprechende zweite Stopperposition ist in Figur 4 gestrichelt dargestellt. Läuft das vordere Ende des Prüfstücks 28 gegen diese zweite Stopperposition, so befindet sich der Stoß 28-29 im Bereich der linken Blende 52, es kann damit der vordere Endbereich des Prüfstücks 29 endbereichsmäßig geprüft werden. Der Abstand der Stopper 62, 63 von den Blenden 52 ergibt sich aus der bekannten oder mittels der Sensoren 34 sowie eines Weggebers 76 ermittelten Prüfstücklänge. Bei gleichbleibender Länge der Prüfstücke wird die erste und die zweite Stopperposition einmal eingestellt. Hierbei kann die Länge des ersten Prüfstücks eines Stranges von Prüfstücken mittels der Sensoren 34 sowie des Weggebers 76 erfaßt und durch Verschieben der Führung 68 auf der Stange 70 die Position des Stoppers 62 bzw. der Stopper 62, 63 vorgegeben werden. Ebenso wird bei variablen Längen der Prüfstücke verfahren, hierbei wird jedes einzelne Prüfstück mittels der Sensoren 34 und des Weggebers 76 abgetastet und der Stopper 62 bzw. die Stopper 62, 63 so positioniert, daß für das jeweilige Prüfstück die richtige Stopperposition vorliegt. Die Axialverschiebung im Sinne des Doppelpfeiles 72 wird somit bei einer Abbremseinrichtung 40 mit nur einem Stopper 62 oder mit zwei Stoppern 62, 63 dazu genutzt, den bzw. die Stopper in den richtigen Abstand (der im wesentlichen der Länge eines Prüfstücks entspricht) von den Buchsen 52 zu bringen, bei einer Abbremseinrichtung 40 mit nur einem Stopper 62 dient die Führung zusätzlich dazu, den einzigen Stopper in die beiden Stopperpositionen gemäß Fig. 4 zu bringen. In den Figuren 4 und 5 ist der Weggeber 76 in Form eines auf einer Erzeugenden des Mantels abrollenden Rades dargestellt.

Der Ablauf bei den Abbremseinrichtungen 40 mit Bremsbacken ist analog. Bei Bremsbacken besteht der Vorteil, daß kein Zwischenraum zwischen aufeinanderfolgenden Prüfstücken für das Eingreifen eines Stoppers 62 geschaffen werden muß. Dementsprechend sind die Prüfstücke 26 bis 29 in den Figuren 1, 2 und 5 auch ohne Abstand voneinander dargestellt. Ein Abstand tritt lediglich in der Darstellung nach Fig. 4 auf.

Die Prüfstücke 26 bis 29 werden mittels Rollen 74 transportiert. Für die Endbereichsprüfung mittels der Prüfanlage 22 wird der Antrieb abgeschaltet, die angetriebenen Rollen 74 werden entweder gestoppt, wie in Figur 5 dargestellt ist, oder schwenken nach unten, außer Kontakt mit den Prüfstücken, weg.

Die aus Figur 6 ersichtliche Gesammtprüfungsanlage besteht aus einer Prüfanlage 20 für die Hauptprüfung und einer neben dieser und parallel zu dieser versetzten Prüfanlage 22 gemäß der Erfindung, die hier ähnlich der Ausbildung gemäß Fig. 4 ausgeführt ist. Die einzelnen Prüfstücke laufen zunächst auf Rollen 74 in eine Prüfmaschine 30 für die Hauptprüfung ein, hier werden sie in bekannter Weise Stoß-an-Stoß liegend und axial im Sinne des Pfeiles 78 transportiert. Hinter der Prüfanlage 20 für die Hauptprüfung erfolgt im Bereich 80 eine Sortierung, fehlerbehaftete Rohre werden (in Richtung des Pfeils 78 gesehen) nach links aussortiert, fehlerfreie Rohre (Gut-Rohre) gelangen nach rechts auf eine schräge Ebene 82, die zugleich als Puffer dient. Sie rollen dort gegen Vorlagestopper 84 und weiter auf Rollen 74, die einen Transport in Richtung des Pfeiles 36 durch die Prüfanlage 22 für die Endbereichsprüfung bewirken. Die Endbereichsprüfung erfolgt in der oben beschriebenen Weise, anschliegend findet in einem Bereich 86 wiederum eine Sortierung statt, fehlerbehaftete Rohre werden zu der einen Seite aus der Transportrichtung 36 quer bewegt, gute Rohre zur anderen Seite.

Die Gesamtprüfanlage nach Fig. 6 hat den Vorteil, daß für den Transport der Prüfstücke aus der Axialrichtung der Prüfanlage 20 für die Hauptprüfung in die Transportrichtung 36 der Prüfanlage 22 für die Endbereichsprüfung kein aktiver Quertransport benötigt wird, vielmehr genügen die beschriebene schräge Ebene 82 und die Vorlagestopper 84 zur Steuerung des Quertransportes zwischen den beiden Prüfanlagen 20, 22. Als Prüfanlage 20 kann eine Prüfanlage mit nicht rotierendem Prüfkopfträger verwendet werden. Die Prüfung in den beiden Prüfanlagen 20, 22 erfolgt unabhängig voneinander, es muß also nicht eine Prüfanlage stoppen, während die andere tätig ist usw., wie dies bei axial hintereinander angeordneten Prüfanlagen 20, 22 oder bei der Prüfanlage gemäß den Figuren 2 und 3 notwendig ist.

## Patentansprüche

1. Verfahren zur Endbereichsprüfung mittels Ultraschall von langgestreckten, rotationssymmetrischen Prüfstücken (26 bis 29), insbesondere Rohren oder kreisrunden Stangen, auf Materialfehler wie Längs-, Quer-, Dopplungs- oder Kernfehler, bei dem die einzelnen Prüfstücke (26 bis 29) in eine Ultraschall-Prüfanlage (22) für die Endbereichsprüfung eingegeben werden und die Endbereichsprüfung durchgeführt wird,
dadurch gekennzeichnet, daß die Prüfstücke (26 bis 29) für die Endbereichsprüfung Stoß-an-Stoß und in Axialrichtung transportiert werden und in dieser Anordnung auch die Endbereichsprüfung durchgeführt wird,
daß die Prüfung beider Endbereiche der Prüstücke in einer einzigen Ultraschall-Endbereichsprüfanlage mit Rotor durchgeführt wird,
– der einen Durchlaß für die Prüfstücke (26 bis 29) aufweist und gleichachsig zu diesen umläuft,
– in dem die für die einzelnen Fehlerarten der Endbereichsprüfung benutzten Prüfköpfe (48) angeordnet sind, und

– der eine seitlich hinreichend wasserdicht abschließbare Ankopplungskammer (50) hat,

daß für die Endbereichsprüfung die bewegten Prüfstücke (26 bis 29) an Positionen abgebremst und gestoppt werden, in denen sich jeweils ein Endbereich eines Prüfstücks (26 bis 29) innerhalb der Ankopplungskammer (50) befindet, und

daß nach Abschluß der Endbereichsprüfung die Prüfstücke (26 bis 29) wieder in Axialrichtung (36) bewegt werden.

2. Verfahren nach Anspruch 1, dadurch gekennzeichnet, daß das Abbremsen und Stoppen durch eine Abbremseinrichtung (40) erfolgt, die in Transportrichtung (36) vor und/oder hinter der Endbereichsprüfung vorgesehen ist und daß bei der Endbereichsprüfung zunächst die Prüfstücke (26 bis 29) so abgebremst und gestoppt werden, daß der hintere Endbereich eines Prüfstücks (z. B. 26) sich in der Ankopplungskammer (50) befindet, nach der Endbereichsprüfung ein Längstransport erfolgt und die Prüfstücke (27 bis 29) erneut gestoppt werden, wenn sich der vordere Endbereich des stoßanliegend nachfolgenden Prüfstücks (z. B. 27) in der Ankopplungskammer (50) befindet.

3. Verfahren nach Anspruch 1 oder 2, dadurch gekennzeichnet, daß die Abbremseinrichtung (40) zwei an unterschiedlichen Orten angeordnete Stopper (62, 63) aufweist, die vor das vordere Ende eines Prüfstücks (26 bis 29) greifen und daß ein Prüfstück (26 bis 29), das die Endbereichsprüfanlage ( 22) vollständig verlassen hat, schneller gezogen wird als die nachfolgenden Prüfstücke transportiert werden, so daß ein Freiraum zwischen diesem Prüfstück und dem nachfolgenden Prüfstück gebildet wird, der am Ort des ersten Stoppers (62) bereits so groß ist, daß der Stopper (62) vor das nachfolgende Prüfstück greifen kann.

4. Verfahren nach Anspruch 1 oder 2, dadurch gekennzeichnet, daß das Abbremsen und Stoppen mittels einer Abbremseinrichtung (40) erfolgt, die mindestens ein Bremsbackenpaar aufweist und daß vorzugsweise zwei Bremsbackenpaare vorgesehen sind, von denen das eine Bremsbackenpaar in Transportrichtung vor und das andere hinter der Endbereichsprüfung angeordnet sind und jeweils dasjenige Prüfstück abbremsen, das sich in der Ankopplungskammer (50) befindet.

5. Verfahren nach einem der Ansprüche 1 bis 4, dadurch gekennzeichnet, daß die axiale Länge der Ankopplungskammer (50) gleich oder etwas größer bemessen wird als die axiale Länge der von der Prüfanlage (20) für die gesamte Prüfstücklänge nicht erfaßbaren Endbereiche.

6. Verfahren nach einem der Ansprüche 1 bis 5, dadurch gekennzeichnet, daß zur Prüfung eines axial längeren Endbereichs des Prüfstücks (26 bis 29) als der axialen Länge der Ankopplungskammer (50) entspricht die Prüfstücke (26 bis 29) zusätzlich in Positionen abgebremst und gestoppt werden, die um ein ganzzahliges Vielfaches der effektiven axialen Länge der Ankopplungskammer (50) versetzt sind.

7. Verfahren nach einem der Ansprüche 1 bis 6, dadurch gekennzeichnet, daß bei Beginn des Abbremsens und Stoppens der Transport der Prüfstüke (26 bis 29) unterbrochen wird.

8. Verfahren nach einem der Ansprüche 1 bis 7, dadurch gekennzeichnet, daß die Ankopplungskammer (50) durch scheibenförmige Blenden (52) seitlich abgeschlossen ist, die mitrotieren und schleifend am Außenmantel des Prüfstücks (26 bis 29) anliegen.

9. Verfahren nach einem der Ansprüche 1 bis 8, dadurch gekennzeichnet, daß die Endbereichsprüfung und die Prüfung über die gesamte Prüfstücklänge d.h, Hauptprüfung in ein- und derselben Prüfanlage durchgeführt werden und daß die Endbereichsprüfung nicht gleichzeitig zur Hauptprüfung durchgeführt wird.

10. Verfahren nach Anspruch 9, dadurch gekennzeichnet, daß die Hauptprüfung und die Endbereichsprüfung unter Benutzung dergleichen Prüfköpfe (48) durchgeführt werden.

11. Verfahren nach einem der Ansprüche 1 bis 8, dadurch gekennzeichnet, daß für die Endbereichsprüfung und die Prüfung über die gesamte Prüfstücklänge d.h, Hauptprüfung separate Prüfanlagen verwendet werden, daß die Prüfstücke die Prüfanlage für die Endbereichsprüfung gleichachsig zur Prüfanlage für die Hauptprüfung durchlaufen, und daß die Endbereichsprüfung nicht gleichzeitig zur Hauptprüfung durchgeführt wird.

12. Verfahren nach einem der Ansprüche 1 bis 8, dadurch gekennzeichnet, daß die Endbereichsprüfung und die Hauptprüfung in separaten Prüfanlagen durchgeführt werden, deren Rotoren parallel zueinander versetzte Drehachsen aufweisen und daß zwischen den beiden Prüfanlagen ein Quertrasport der Prüfstücke erfolgt.

13. Vorrichtung zur Endbereichsprüfung mittels Ultraschall von langgestreckten, rotationssymmetrischen Prüfstücken (26 bis 29), insbesondere Rohr "oder kreisrunde" Stangen, auf Materialfehler wie Längs-, Quer-, Dopplungs- oder Kernfehler mit einer Ultraschall-Prüfanlage (22) für Endbereichsprüfung, zur Durchführung der Verfahren nach einem der Ansprüche 1 bis 12, dadurch gekennzeichnet, daß eine Transportvorrichtung für den Stoß-an-Stoß-Transport in Axialrichtung der Prüfstücke (26 bis 29) vorhanden ist, daß die Prüfanlage (22) einen Rotor aufweist

– der einen Durchlaß für die Prüfstücke (26 bis 29) aufweist und gleichachsig zu diesen umläuft,

– in dem für die einzelnen Fehlerarbeiten der Endbereichsprüfung benutzte Ultraschall-Prüfköpfe (48) an-

7

geordnet sind und

– der eine seitlich hinreichend wasserdicht abschließbare Ankopplungskammer (50) hat, die Blenden (52) aufweist,

daß Buchsen (53) zur Führung der Prüfstücke (26 bis 29) vor vorhanden sind und daß eine Abbremseinrichtung (40) vorhanden ist, die mindestens einen Stopper (62) oder ein Bremsbackenpaar aufweist, die so elastisch und nachgiebig angeordnet sind, daß sie die kinetische Energie der linear bewegten Prüfstücke (26 bis 29) aufnehmen können.

14. Vorrichtung nach Ansprüch 13, dadurch gekennzeichnet, daß für den Fall, daß für die Hauptprüfung und die Endbereichsprüfung ein gemeinsamer Rotor (42) vorgesehen ist, die Prüfköpfe (48) einerseits mit der Auswerteeinrichtung für die Endbereichsprüfung und andererseits mit der Auswerteeinrichtung für die Hauptprüfung verbindbar sind.

15. Vorrichtung nach Ansprüch 14, dadurch gekennzeichnet, daß für den Fall, daß einige der Prüfköpfe (48) nur für die Hauptprüfung und nicht für die Endbereichsprüfung oder nur für die Endbereichsprüfung und nicht für die Hauptprüfung vorgesehen sind, die axial gemessene Prüfbreite der Anordnung der Prüfköpfe (48) beider Prüfungen den gleichen Wert hat und die beiden Anordnungen ohne axialen Versatz gegeneinander im Rotor (42) untergebracht sind.

16. Vorrichtung nach einem der Ansprüche 13 bis 15, dadurch gekennzeichnet, daß die Abbremseinrichtung (40) steuerungsmäßig mit Sensoren (32) für die Prüfstücklängenbegrenzung verbunden ist.

17. Vorrichtung nach einem der Ansprüche 13 bis 16, dadurch gekennzeichnet, daß die mit mindestens einem Stopper (62) versehene Abbremseinrichtung (40) in Transportrichtung (36) hinter der Prüfanlage (22) für die Endbereichsprüfung angeordnet ist und entweder der Stopper (62) in Richtung der Achse (24) verschiebbar angeordnet ist oder zwei Stopper (62) vorgesehen sind, die in einem Abstand voneinander (bezogen auf die Achse 24) angeordnet sind, der im wesentlichen der axialen Abmessung der Ankopplungskammer (52) entspricht.

18. Vorrichtung nach einem der Asprüche 13 bis 17, dadurch gekennzeichnet, daß die mit mindestens einem Stopper (62) versehene Abbremseinrichtung (40) eine Führung (68) aufweist, die auf einer Stange (70) in Richtung eines Doppelpfeils (72) verschiebbar ist, und daß die Verschiebestrecke im Sinne des Doppelpfeils (72) größer ist als der Längenunterschied zwischen dem kürzesten zu prüfenden und dem längsten zu prüfenden Prüfstück.

19. Vorrichtung nach einem der Ansprüche 13 bis 18, dadurch gekennzeichnet, daß bei einer mit mindestens einem Bremsbackenpaar ausgerüsteten Abbremseinrichtung (40) das hinter der Prüfanlage (22) angeordnete Bremsbackenpaar möglichst nahe der Prüfanlage (22) angeordnet und nicht weiter von dieser entfernt ist als die Länge des kürzesten, zu prüfenden Prüfstücks.

**Claims**

1. Process for the end region testing by means of ultrasonics of elongated rotationally symmetrical test pieces 26 to 29, in particular, tubes or circular rods, for material defects such as longitudinal, transverse, doubling or core defects, in which the the individual test pieces (26 to 29) are inserted into an ultrasonic test apparatus (22) for end region testing and in which the end region testing is performed,

**wherein** the test pieces 26 to 29 for end region testing are conveyed abutting end-to-end in axial direction and in this arrangement the end region test is also effected,

the testing of both end regions of the test pieces 26 to 29 is performed in a single ultrasonic end region test apparatus with a rotor,

– which exhibits a through-passage for the test pieces (26 to 29) and rotates on the same axis as said test pieces,

– in which are arranged the test heads (48) used in the end region test for the individual types of defect, and

– which has a laterally adequately watertight probe-to-specimen contact chamber (50) which can be closed off,

for the end region test the moved test pieces (26 to 29) can be braked and stopped in positions in which one end region of a test piece at a time is situated in the probe-to-specimen contact chamber (50), and

after conclusion of the end region test, the test pieces (26 to 29) can again be moved in axial direction (36).

2. Process according to claim 1, **wherein** braking and stopping are effected by a braking device (40) which is provided in conveyance direction (36) before and/or after the end region test, and during the end region test the test pieces (26 to 29) are initially braked and stopped so that the rear end region (e.g. 26) is located in the probe-to-specimen contact chamber (50). After the end region test, longitudinal conveyance is effected and the test pieces (27 to 29) are stopped once again, when the forward end region of the succeeding test piece (e.g. 27) in abutting contact is located in the probe-to-specimen contact chamber (50).

3. Process according to claims 1 or 2, **wherein** the braking device (40) exhibits two stoppers (62, 63) arranged in different places, which grasp in front of the forward end of a test piece (26 to 29) and a test piece (26 to 29) which has completely left the end region test apparatus (22) is drawn more quickly than the following test pieces are conveyed with the result that a space is formed between this test piece and the following test piece, said space being already so large at the position of the first stopper (62) that the stopper (62) is able to grasp in front of the forward end of the next following test piece.

4. Process according to claims 1 or 2, **wherein** braking and stopping are effected by a braking device (40) which exhibits at least one pair of brake shoes and in which there are preferably provided two pairs of brake shoes of which one pair of brake shoes is arranged in conveyance direction before and the other behind the end region test and each time that test piece is braked which is located in the probe-to-specimen contact chamber 50.

5. Process according to claims 1 to 4, **wherein** the axial length of the probe-to-specimen contact chamber (50) is dimensioned to be the same as or somewhat longer than the axial length of the end regions which cannot be acquired by the test apparatus (20) for the whole length of the test piece.

6. Process according to claims 1 to 5, **wherein** for the testing of an axially longer end region of the test piece (26 to 29) than corresponds with the axial length of the probe-to-specimen contact chamber (50), the test pieces (26 to 29) are additionally braked and stopped in positions which are displaced by an integral multiple of the effective axial length of the probe-to-specimen contact chamber (50).

7. Process according to one of the claims 1 to 6, **wherein** upon commencement of braking and stopping the conveyance of test pieces (26 to 29) is interrupted.

8. Process according to one of the claims 1 to 7, **wherein** the probe-to-specimen contact chamber (50) is laterally enclosed by disk-shaped diaphragms (52) which rotate with the test piece and are in slide contact with the outer casing of the test piece (26 to 29).

9. Process according to one of the claims 1 to 8, **wherein** the end region test and the test over the whole length of the test piece, i.e. the main test, are carried out in one and the same test apparatus, and the end region test is not performed simultaneously to the main test.

10. Process according to claim 9, **wherein** the main test and the end region test is performed using the same test heads (48).

11. Process according to claims 1 to 8, **wherein** for the end region test and the test over the whole length of the test piece, i.e. the main test, separate test apparatuses are used, the test pieces pass through the test apparatus for the end region test along the same axis relative to the test apparatus as for the main test, and the end region test is not performed simultaneously to the main test.

12. Process according to one of the claims 1 to 8, **wherein** the end region test and the main test are performed in separate test apparatuses, the rotors of which exhibit rotary shafts displaced parallel to one another and transverse conveyance is effected between the two test apparatuses.

13. Device for the ultrasonic end region testing of elongated rotationally symmetrical test pieces (26 to 29), in particular, tubes or circular rods as to material defects such as longitudinal, transverse, doubling or core defects with an ultrasonic test apparatus (22) for end region testing, for the performance of the process according to claims 1 to 12, **wherein** a transport device exists for abutting end-to-end conveyance of the test pieces (26 to 29) in axial direction, the test apparatus (22) exhibits a rotor,
– which exhibits a through-passage for the test pieces (26 to 29) and rotates on the same axis as these,
– in which the ultrasonic test heads (48) used for the individual defect work of the end region test are arranged, and
– which has a lateral probe-to-specimen contact chamber (50) capable of being sealed off adequately watertightly, which exhibits diaphragms (52),
bushings (53) exist for the guidance of the test pieces (26 to 29) and a braking device (40) exists which exhibits at least one stopper (62) or one pair of brake shoes, which are arranged so elastically and flexibly that they can absorb the kinetic energy of the linearly moved test pieces (26 to 29).

14. Device according to claim 13, **wherein** for the case in which a common rotor (42) is provided for the main test and the end region test, the test heads (48) are connectable on the one side with the evaluation device for the end region test and on the other side with the evaluation for the main test.

15. Devices according to claim 14, **wherein** for the case in which some of the test heads (48) are provided only for the main test and not for the end region test, or only for the end region test and not for the main test, the axially measured test width of the arrangement of the test heads (48) of both tests has the same value and both arrangements reside opposite one another in the rotor (42) without any axial misalignment,

16. Device according to one of the claims 13 to 15, **wherein** for purposes of control the braking device (40) is linked in terms of control with sensors (32) for limitation of the test piece lengths.

17. Device according to one of the claims 13 to 16, **wherein** the braking device (40), which is fitted with at least one stopper (62), is arranged in the direction of travel (36) behind the test apparatus (22) for end region testing and either the stopper (62) is arranged slidably in the direction of the axis (24) or two stoppers (62) are provided which are arranged at a distance from one another (relative to axis 24), said distance corresponding essentially with the axial dimension of the probe-to-specimen contact chamber (52).

18. Device according to one of the claims 13 to 17, **wherein** the braking device (40), which is fitted with at least one stopper (62), exhibits a guide (68) which is slidable along a bar (70) in the direction of a double arrow (72), and the sliding distance in the direction of the double arrow (72) is greater than the difference in length between the shortest and the longest test pieces to be tested.

19. Device according to one of the claims 13 to 18, **wherein** in the case of a braking device (40) equipped with at least one brake shoe pair, the brake shoe pair arranged behind the test apparatus (22), is arranged as near as possible to the test apparatus (22) and is not at a distance from the latter which is greater than the length of the shortest test piece to be tested.

## Revendications

1. Procédé pour l'essai des régions extrêmes d'éprouvettes allongées à symétrie de révolution par ultrason (26 à 29), notamment de tubes ou de barres circulaires pour déceler des défauts de matériaux tels que des défauts longitudinaux, transversaux, de doublage ou de noyau, pour lequel les éprouvettes individuelles (26 à 29) sont placées dans un dispositif d'essai à ultrason (22) pour l'essai des régions extrêmes suite à quoi l'essai des régions extrêmes peut être effectué,
caractérisé par le fait que les éprouvettes (26 à 29) pour l'essai des régions extrêmes sont transportées bout à bout et dans le sens axial et que l'essai des régions extrêmes est également effectué dans cette disposition, que l'essai des deux régions extrêmes des éprouvettes est effectué dans un seul dispositif d'essai de régions extrêmes par ultrason avec rotor
– qui présente un passage pour les éprouvettes (26 à 29) et qui est en rotation autour de celles-ci dans le même axe,
– dans lequel sont disposées les têtes d'essai (48) utilisées pour les différents types de défauts de l'essai des régions extrêmes et
– qui dispose d'une chambre de couplage (50) pouvant être verrouillée et suffisamment étanche à l'eau sur le côté,
que, pour l'essai des régions extrêmes, les éprouvettes mobiles (26 à 29) sont freinées et arrêtées sur des positions pour lesquelles une régions extrême d'une éprouvette (26 à 29) se trouve à l'intérieur de la chambre de couplage (50) et
que, à la fin de l'essai des régions extrêmes, les éprouvettes (26 à 29) sont à nouveau déplacées dans le sens axial (36).

2. Procédé selon la revendication 1 caractérisé par le fait que le freinage et l'arrêt sont assurés par un dispositif de freinage (40) qui est prévu dans le sens du transport (36) devant et/ou derrière l'essai des régions extrêmes et que, lors de l'essai des régions extrêmes, les éprouvettes (26 à 29) sont tout d'abord freinées et arrêtées de manière que la région extrême arrière d'une éprouvette (26 p. ex.) se trouve dans la chambre de couplage (50), qu'un transport longitudinal a lieu après l'essai des régions extrêmes et que les éprouvettes (27 à 29) sont à nouveau arrêtées lorsque la région extrême avant de l'éprouvette suivante aboutée (27 p. ex.) se trouve dans la chambre de couplage (50).

3. Procédé selon la revendication 1 ou 2 caractérisé par le fait que le dispositif de freinage (40) présente deux butées (62, 63) disposées en différents endroits qui s'engrènent avant l'extrémité avant d'une éprouvette (26 à 29) et qu'une éprouvette (26 à 29) qui a totalement quitté le dispositif d'essai de régions extrêmes (22) est tirée à une vitesse plus rapide que celle à laquelle les prochaines éprouvettes sont transportées de manière à obtenir un espace libre entre cette éprouvette et la prochaine et que cet espace est déjà si grand au niveau de la première butée (62) que la butée (62) peut s'engréner avant la prochaine éprouvette.

4. Procédé selon la revendication 1 ou 2 caractérisé par le fait que le freinage et l'arrêt se font à l'aide d'un dispositif de freinage (40) qui comporte au moins une paire de mâchoires de freinage et que deux paires de mâchoires de freinage sont de préférence prévues, toutes deux étant disposées dans le sens du transport, l'une devant et l'autre derrière le dispositif d'essai des régions extrêmes et que l'éprouvette qui se trouve dans la chambre de couplage (50) est celle qui est freinée.

5. Procédé selon l'une des revendications 1 à 4 caractérisé par le fait que la longueur axiale de la chambre de couplage (50) est identique ou légèrement plus grande que la longueur axiale des régions extrêmes non saisissables par le dispositif d'essai (20) pour toute la longueur des éprouvettes.

6. Procédé selon l'une des revendications 1 à 5 caractérisé par le fait que, pour l'essai d'une région extrême de l'éprouvette (26 à 29) axialement plus longue que la longueur axiale de la chambre de couplage (50), les éprouvettes (26 à 29) sont en plus freinées et arrêtées dans des positions qui sont décalées d'un multiple entier de la longueur axiale effective de la chambre de couplage (50).

7. Procédé selon l'une des revendications 1 à 6 caractérisé par le fait que, au début du freinage et de l'arrêt, le transport des éprouvettes (26 à 29) est interrompu.

8. Procédé selon l'une des revendications 1 à 7 caractérisé par le fait que la chambre de couplage (50) est obturée latéralement par des parements (52) en forme de vitres qui sont également en rotation et qui frottent sur la gaine extérieure de l'éprouvette (26 à 29).

9. Procédé selon l'une des revendications 1 à 8 caractérisé par le fait que l'essai des régions extrêmes et l'essai sur toute la longueur des éprouvettes, c'est-à-dire l'essai principal, se font dans le même dispositif d'essai et que l'essai des régions extrêmes n'est pas effectué en même temps que l'essai principal.

10. Procédé selon la revendication 9 caractérisé par le fait que l'essai principal et l'essai des régions extrêmes sont effectués avec les mêmes têtes d'essai (48).

11. Procédé selon l'une des revendications 1 à 8 caractérisé par le fait que des dispositifs d'essai séparés sont employés pour l'essai des régions extrêmes et l'essai sur toute la longueur des éprouvettes, c'est-à-dire l'essai principal, que les éprouvettes passent dans le dispositif d'essai pour l'essai des régions extrêmes dans le même axe que pour le dispositif d'essai de l'essai principal et que l'essai des régions extrêmes n'est pas effectué en même temps que l'essai principal.

12. Procédé selon l'une des revendications 1 à 8 caractérisé par le fait que l'essai des régions extrêmes et l'essai principal sont effectués dans des dispositifs d'essai séparés dont les rotors présentent des axes rotatifs parallèlement décalés entre eux et qu'un transport transversal des éprouvettes se fait entre les deux dispositifs d'essai.

13. Dispositif pour l'essai des régions extrêmes d'éprouvettes allongées à symétrie de révolution par ultrason (26 à 29), notamment de tubes ou de barres circulaires pour déceler des défauts de matériaux tels que des défauts longitudinaux, transversaux, de doublage ou de noyau avec un dispositif d'essai à ultrason (22) pour l'essai des régions extrêmes, pour la réalisation des procédés selon l'une des revendications 1 à 12, caractérisé par le fait qu'un dispositif de transport bout à bout est disponible dans le sens axial des éprouvettes (26 à 29) et que le dispositif d'essai (22) est équipé d'un rotor
- qui présente un passage pour les éprouvettes (26 à 29) et qui est en rotation autour de celles-ci dans le même axe,
- dans lequel sont disposées les têtes d'essai à ultrason (48) utilisées pour les différents travaux de défauts de l'essai des régions extrêmes et
- qui dispose d'une chambre de couplage (50) pouvant être verrouillée et suffisamment étanche à l'eau sur le côté et présentant des parements (52)

que des coussinets (53) sont disponibles pour le guidage des éprouvettes (26 à 29) et qu'un dispositif de freinage (40) est disponible, lequel présente au moins une butée (62) ou une paire de mâchoires de freinage disposées de manière élastique et flexible pour pouvoir absorber l'énergie cinétique des éprouvettes à déplacement linéaire (26 à 29).

14. Dispositif selon revendication 13 caractérisé par le fait que, au cas où un rotor commun (42) serait prévu pour l'essai principal et l'essai des régions extrêmes, les têtes d'essai (48) puissent être reliées d'une part à l'unité d'évaluation pour l'essai des régions extrêmes et, d'autre part, à l'unité d'évaluation pour l'essai principal.

15. Dispositif selon revendication 14 caractérisé par le fait que, au cas où quelques unes des têtes d'essai (48) seraient uniquement prévues pour l'essai principal et pas pour l'essai des régions extrêmes ou uniquement pour l'essai des régions extrêmes et pas pour l'essai principal, la largeur d'essai axialement mesurée de la disposition des têtes d'essai (48) des deux essais ait la même valeur et que les deux montages soient logés sans décalage axial l'un contre l'autre dans le rotor (42).

16. Dispositif selon l'une des revendications 13 à 15 caractérisé par le fait que le dispositif de freinage (40) est relié du point de vue commande à des capteurs (32) pour la délimitation de la longueur des éprouvettes.

17. Dispositif selon l'une des revendications 13 à 16 caractérisé par le fait que le dispositif de freinage (40) équipé d'au moins une butée (62) est disposé dans le sens du transport (36) derrière le dispositif d'essai (22) pour l'essai des régions extrêmes et que la butée (62) est disposée de manière à pouvoir être coulissée dans le sens de l'axe (24) ou que deux butées (62) sont prévues avec un écartement entre elles (par rapport à l'axe 24) qui correspond pour l'essentiel à la dimension axiale de la chambre de couplage (52).

18. Dispositif selon l'une des revendications 13 à 17 caractérisé par le fait que le dispositif de freinage (40) doté d'au moins une butée (62) présente un guidage (68) qui peut être coulissé sur une barre (70) dans le sens d'une double flèche (72) et que le trajet de coulissement au sens de la double flèche (72) est supérieur à la différence de longueur entre l'éprouvette la plus courte et l'éprouvette la plus longue à tester.

19. Dispositif selon l'une des revendications 13 à 18 caractérisé par le fait que sur le dispositif de freinage (40) doté d'au moins une paire de mâchoires de serrage, la paire de mâchoires de serrage disposée derrière le dispositif d'essai (22) est si possible près du dispositif d'essai (22) et pas plus éloignée de celui-ci que la longueur de l'éprouvette la plus courte à tester.

FIG. 1

FIG. 2

FIG. 3

# FIG. 4

# FIG. 5

# FIG. 6